# EUROPEAN PATENT APPLICATION

(11) **EP 1 686 835 A1**
(43) Date of publication of application: **02.08.2006**
(21) Application number: 05100490.1
(22) Date of filing: 26.01.2005
(51) Int. Cl.: H04R 27/00

(54) **Conference system**

(71) Applicant: ROBERT BOSCH GMBH, 70442 Stuttgart (DE)
(72) Inventor: Hoengens, Renier, 4811 PC Breda (NL); Smaak, Marc, 4614 JR Bergen op Zoom (NL); Schellekens, Sjack, 5035 JM Tilburg (NL); Hermans, Ad, 4861 AZ Chaam (NL); Goudsmits, Henk, 5685 DP Best (NL)

(57) **Abstract**

The invention relates to a method for indicating states on a microphone of a delegate unit, a microphone for a delegate unit and a delegate unit for a conference system. A request-to-speak-state is indicated by a steady green indicator on the microphone of a delegate unit, visible for other delegates and the public of the meeting. Furthermore a next-speaker-state is indicated by a flashing green indicator on the microphone of a delegate unit, visible for other delegates and the public of the meeting. The indicator on the microphone of the delegate unit is at least one bicolour and/or at least one multicolour indicator.

## Description

### Background Information

This invention relates to a method for indicating states on a microphone of a delegate unit, a microphone for a delegate unit and a delegate unit for a conference system.

EP 0224 754 A1 discloses an electro acoustic discussion arrangement with a central control and a number of subscriber instruments connected to the central control. Each subscriber instrument comprises a microphone and associated operating elements.

### Advantages of the Invention

The method for indicating states on a microphone of a delegate unit, the microphone for a delegate unit and the delegate unit for a conference system have the advantage over the prior art that the current speaker, the other delegates and the public of the meeting can see who speaks and/or who has requested to speak and/or who the next speaker will be and/or where the next speaker is located. The second colour of the indicator (source of light) on the microphone of the delegate unit allows the persons of the meeting to see which delegate unit is in the request-to-speak-state and/or in the next-speaker-state with the advantage that the current speaker, the other delegates and the public can anticipate on the next speaker.

Further advantages are derived from the features cited in the further dependent claims and in the description.

### Drawing

An exemplary embodiment of the invention is shown in the drawing and described in further detail in the ensuing description.

In the drawings:
- Figure 1 shows a block diagram of the conference system,
- Figure 2 shows a block diagram of the conference unit,
- Figure 3 shows a state diagram,
- Figure 4 shows a microphone,
- Figure 5 shows a microphone.

### Description of the Exemplary Embodiments

In the following a method for indicating states on a microphone of a delegate unit, a microphone for a delegate unit and a delegate unit for a conference system is described. A request-to-speak-state is indicated by a steady green indicator on the microphone of a delegate unit, visible for other delegates and the public of the meeting. Furthermore a next-speaker-state is indicated by a flashing green indicator on the microphone of a delegate unit, visible for other delegates and the public of the meeting. Preferably the indicator on the microphone of the delegate unit is at least one bicolour and/or at least one multicolour indicator.

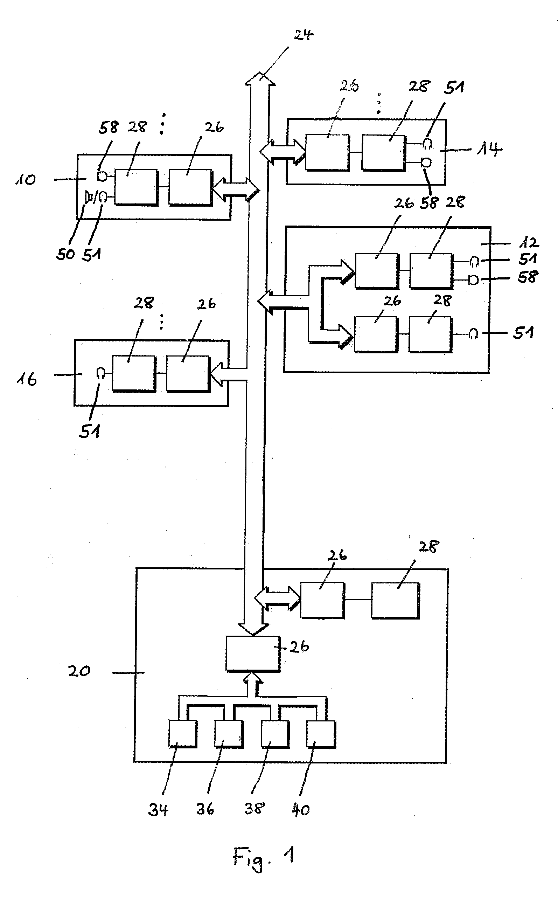

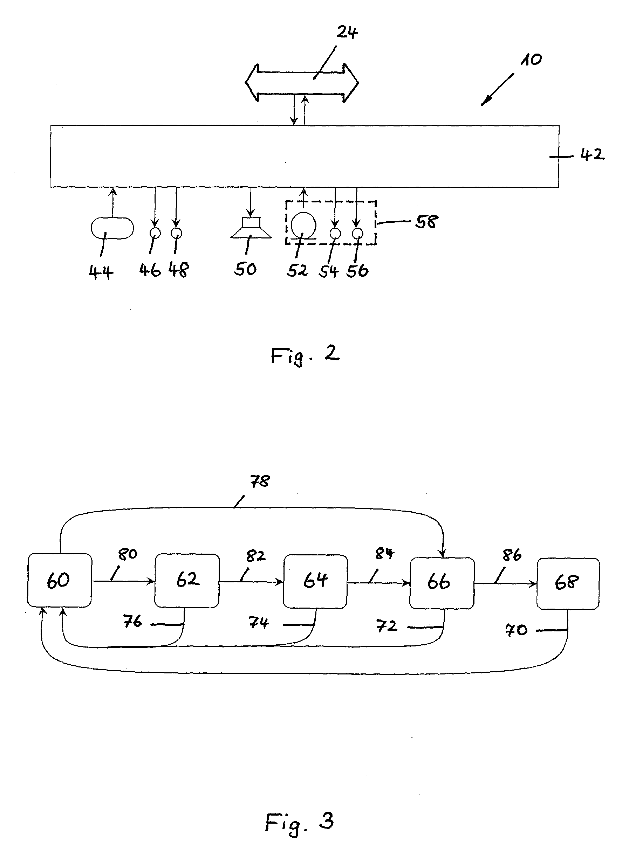

Figure 1 shows a block diagram of the conference system, comprising conference units 10, a chairman unit 12, a central control unit 20 and an audio communication network 24. The conference units 10, the chairman unit 12, the interpreter units 14, the language distribution units 16 and the central control unit 20 are connected to the audio communication network 24. In the preferred embodiment the signal transmission and the signal processing is handled by digital audio technology. The conference unit 10 comprises a network protocol converter 26, an analogue-digital converter 28, a loudspeaker 50, a headphone 51 and a microphone 58. In the preferred embodiment the conference unit 10 allows participants of the conference to access facilities to listen, speak, register a request-to-speak and receive simultaneous interpretation of the floor language. An embodiment of the conference unit 10 is shown in figure 2. The chairman unit 12 comprises network protocol converters 26, analogue-digital converters 28, headphones 51 and a microphone 58. In the preferred embodiment the chairman unit 12 is adapted to control the conference proceeding. Furthermore the chairman unit 12 has a microphone priority system that temporarily mutes active microphones. The interpreter unit 14 comprises a network protocol converter 26, an analogue-digital converter 28, a headphone 51 and a microphone 58 allowing simultaneous interpretation and distribution of the interpretations to conference participants over the audio communication network 24 to the conference units 10, the chairman unit 12 and the language distribution units 16. The language distribution unit 16 comprises network a protocol converter 26, an analogue-digital converter 28 and a headphone 51 allowing people present at the conference in a non-contributing role to listen to any of the interpretations through headphones 51. The central control unit 20 comprises network protocol converters 26, an analogue-digital converter 28, a read-only-memory 34 (ROM), a random-access-memory 36 (RAM), a flash EPROM 38 and a digital signal processor 40 (DSP). In the preferred embodiment the central control unit 20 provides automatic conference control and microphone management. The network protocol converter 26 connects the analogue-digital converter 28 to the audio communication network 24 and furnishes the network protocol, wherein the analogue-digital converter 28 is a combined analogue-to-digital and digital-to-analogue converter converting the digital signal from the audio communication network 24 to audio, and converting the audio signal to digital.

Figure 2 shows a block diagram of the conference unit 10, comprising a processing device 42 and a microphone 58. The conference unit further comprises a request-to-speak-button 44, a microphone-on-indicator 46 on the conference unit 10, a request-to-speak-indicator 48 on the conference unit 10 and a loudspeaker 50. In the preferred embodiment the processing device 42 controls the conference unit 10 and furnishes a bidirectional signal connection to the audio communication network 24. The processing device 42 comprises a network protocol converter and an analogue-digital converter. The microphone-on-indicator 46 on the conference unit 10 indicates to the delegate the microphone-on-state of his/her conference unit 10, wherein the request-to-speak-indicator 48 on the conference unit 10 indicates to the delegate the request-to-speak-state of his/her conference unit 10. In the preferred embodiment the microphone-on-indicator 46 on the conference unit 10 is a red LED and the request-to-speak-indicator 48 on the conference unit 10 is green or yellow LED. Furthermore the microphone-on-indicator 46 flashes in order to indicate a last minute to speak. In another embodiment the microphone-on-indicator 46 on the conference unit 10 and the request-to-speak-indicator 48 on the conference unit 10 is a single bicolour indicator. Furthermore the microphone 58 comprises a condenser microphone 52, a microphone-on-indicator 54 on the microphone 58 and a request-to-speak-indicator 56 on the microphone 58. The microphone-on-indicator 54 on the microphone 58 indicates to all delegates and to the public of the meeting, which microphone 58 is on, wherein the request-to-speak-indicator 56 on the microphone 58 indicates to all delegates and to the public of the meeting, who has requested to speak and/or who the next speaker will be and/or where this delegate is located. In another embodiment the microphone-on-indicator 54 on the microphone 58 and the request-to-speak-indicator 56 on the microphone 58 are realized by a bicolour indicator and not by two separate indicators.

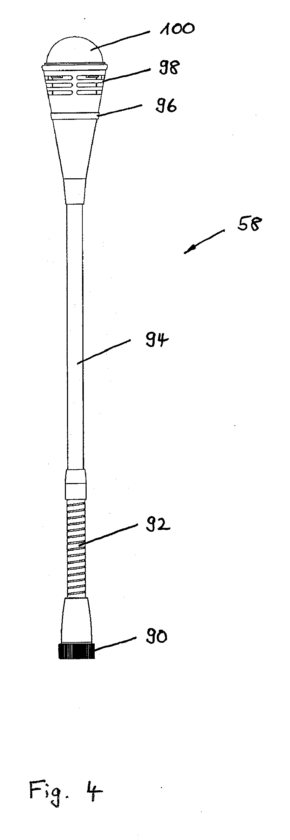

Figure 3 shows a state transition diagram of the conference unit, comprising an idle-state 60, a request-to-speak-state 62, a next-speaker-state 64, a microphone-on-state 66 and a last-minute-state 68. The logic of the conference unit starts at the idle-state 60. The idle-state 60 corresponds to the situation where no indication on the conference unit and no indication on the microphone are shown. When the request-to-speak-button has been pressed and the list of requests to speak is full, there is a transition 80 from the idle-state 60 to the request-to-speak-state 62. The request-to-speak-state 62 corresponds to the situation where the request-to-speak-indicator on the conference unit and the request-to-speak-indicator on the microphone radiate a steady green light. In the preferred embodiment requests are stored centrally. The requests are stored in the list of requests to speak in a memory, preferably in a random access memory (RAM), of the central control unit. This is necessary to determine the order of the list of requests to speak. When a request-to-speak-button has been pressed, the conference unit transmits a message to the central control unit indicating a request to speak. The central control unit stores this request to speak in the list of requests to speak. When the list of requests to speak is full, the central control unit activates the request-to-speak-indicator of the conference unit steady. When a request to speak of the conference unit is the first request to speak on the list of requests to speak, there is a transition 82 from the request-to-speak-state 62 to the next-speaker-state 64. The next-speaker-state 64 corresponds to the situation where the request-to-speak-indicator on the conference unit and the request-to-speak-indicator on the microphone radiate a flashing green light. In the preferred embodiment the central control unit controls the request-to-speak-indicator. When a request-to-speak of a particular conference unit is the first request to speak on the list of requests to speak, the central control unit activates the request-to-speak-indicator of this conference unit blinking. When the actual speaker is ready, there is a transition 84 from the next-speaker-state 64 to the microphone-on-state 66. The microphone-on-state 66 corresponds to the situation where the microphone-on-indicator on the conference unit and the microphone-on-indicator on the microphone radiate a steady red light, wherein the microphone is active. When a timer for a remaining time to speak is less than a predetermined time, there is a transition 86 from the microphone-on-state 66 to the last-minute-state 68. The last-minute-state 68 corresponds to the situation where the microphone-on-indicator on the conference unit and the microphone-on-indicator on the microphone radiate a flashing red light, wherein the microphone is active. The predetermined time is between 30 seconds and 120 seconds, preferably 60 seconds. At the request-to-speak-state 62 or the next-speaker-state 64 or the microphone-on-state 66 or the last-minute-state 68, if the request-to-speak-button has been pressed, then there is a transition 70, 72, 74, 76 from the request-to-speak-state 62 or the next-speaker-state 64 or the microphone-on-state 66 or the last-minute-state 68 to the idle-state 60. When the request-to-speak-button has been pressed and the requests to speak list is empty, there is a transition 78 from the idle-state 60 to the microphone-on-state 62.

Figure 4 shows a microphone 58 of the conference unit, comprising a connector 90, an adjustable stem 92, a stem 94, an indicator ring 96, a windshield 98 and a plop shield 100. The connector 90 plugs into the socket of the conference unit. In this embodiment of the microphone the request-to-speak-indicator and the microphone-on-indicator is realized by a ring-shaped bicolour indicator 96 on the microphone 58.

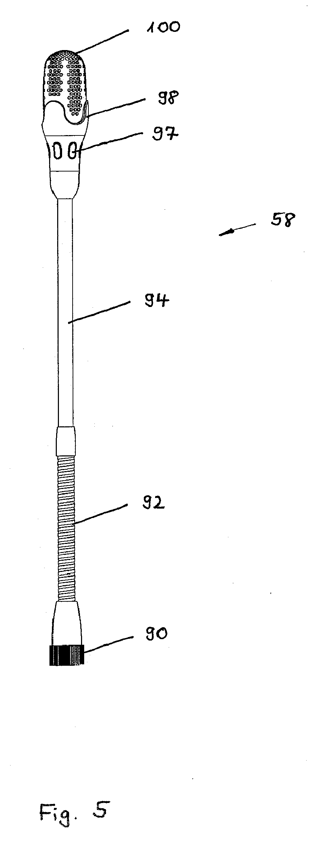

Figure 5 shows a another microphone 58 of the conference unit, comprising a connector 90, an adjustable stem 92, a stem 94, indicators 97, a windshield 98 and a plop shield 100. The connector 90 plugs into the socket of the conference unit. In the area of the windshield of the microphone there are six recesses in the housing which serve as lighted areas 97. The housing is in the form of cylinder. The recesses are ordered concentrically. The lighted areas 97 are lighted by six LED's, three green LED's and three red LED's. Only one colour is lighted at the same moment. The LED's are mounted on a printed circuit board (PCB). The printed circuit board is coloured white. The white colour of the printed circuit board in stead of the more usual colour green has the advantage to better reflect the light. In summery the request-to-speak-indicator is realized by three green LED's, wherein the microphone-on-indicator is realized by three red LED's.

In another embodiment the request-to-speak-indicator is realized by at least one green light bulb and/or at least one yellow light bulb, wherein the microphone-on-indicator is realized by a red light bulb. In another embodiment the request-to-speak-indicator and the microphone-on-indicator is realized by at least one bicolour indicator, preferably by at least on bicolour LED, on the microphone.

In the preferred embodiment with a delegate is meant a person participating in a meeting who has the opportunity to speak. The described method is not limited to the described conference unit, but is generally applicable to delegate units, wherein delegate units comprise discussion units and/or conference units and/or chairman units. When a conference system is mentioned, also a discussion system and/or a congress system are meant. Furthermore, when a request-to-speak-button is mentioned, also a "microphone on/off button" or a "microphone on/off or request-to-speak-button" is meant.

## Claims

1. Method for indicating states on a microphone of a delegate unit of a conference system, wherein at least one indicator of the microphone radiates light in a first colour, when the delegate unit of the conference system is in at least one first state, wherein said indicator radiates light in a second colour, when the delegate unit of the conference system is in at least one second state, wherein said second state is different from said first state.

2. Method according to claim 1, **characterised in that** said indicator of the microphone radiates a steady light in the first colour indicating a microphone-on-state, when the microphone is active.

3. Method according to one of the preceding claims, **characterised in that** said indicator of the microphone radiates a flashing light in the first colour indicating a last-minute-state, when a timer for a remaining time to speak is less than a predetermined time.

4. Method according to one of the preceding claims, **characterised in that** said indicator of the microphone radiates a steady light in the second colour indicating a request-to-speak-state, when a request-to-speak-button of the delegate unit is activated.

5. Method according to one of the preceding claims, **characterised in that** said indicator of the microphone radiates a flashing light in the second colour indicating a next-speaker-state, when a request to speak of said delegate unit is a first request to speak on a list of requests to speak, wherein said list of requests to speak is preferably stored in a memory.

6. Method according to one of the preceding claims, **characterised in that** the first colour is red and/or the second colour is green and/or the second colour is yellow.

7. Microphone for a delegate unit of a conference system, preferably for carrying out the method of one of the preceding claims, comprising at least one indicator, wherein said indicator radiates light in a first colour indicating at least one first state of the delegate unit of the conference system, wherein said indicator radiates light in a second colour indicating at least one second state of the delegate unit of the conference system, wherein said second state of the delegate unit is different from said first state of the delegate unit.

8. Microphone according to claim 7, **characterised in that** said indicator is a bicolour indicator and/or a multicolour indicator.

9. Microphone according to claim 7 or 8, **characterised in that** said indicator is ring-shaped.

10. Microphone according to claim 7, 8 or 9, **characterised in that** said indicator comprises at least one printed circuit board, preferably at least on white printed circuit board, and at least one LED, preferably at least on red LED and/or at least one green LED and/or at least one yellow LED.

11. Delegate unit for a conference system, preferably for carrying out the method of one of the claims 1, 2, 3, 4, 5 or 6, comprising at least one microphone, wherein said microphone comprises at least one indicator, wherein said indicator radiates light in a first colour, when the delegate unit is in at least one first state, wherein said indicator radiates light in a second colour, when the delegate unit is in at least one second state, wherein said second state is different from said first state.

12. Delegate unit according to claim 11, **characterised in that** said delegate unit further comprises a request-to-speak-button and/or an interface to a memory, wherein said interface is adapted to access a list of requests to speak stored in said memory.

13. Delegate unit according to claim 12, **characterised in that** said delegate unit is adapted to control said indicator so that said indicator radiates a steady light in the second colour, especially yellow and/or green, when said request-to-speak-button is activated.

14. Delegate unit according to claim 12 or 13, **characterised in that** said delegate unit is adapted to control said indicator so that said indicator radiates a flashing light in the second colour, especially yellow and/or green, when a request to speak of said delegate unit is the first request to speak on the list of requests to speak.
